# EUROPEAN PATENT SPECIFICATION

(11) **EP 4 331 915 B1**
(45) Date of publication and mention of the grant of the patent: **24.06.2026**
(21) Application number: 21938267.8
(22) Date of filing: 27.04.2021
(51) Int. Cl.: B60R 7/08, B60R 7/04, B42F 17/00, A45C 11/18

(54) **VEHICLE CARD BOX AND VEHICLE**
FAHRZEUGKARTENKASTEN UND FAHRZEUG
BAC À CARTES DE VÉHICULE ET VÉHICULE

(43) Date of publication of application: 06.03.2024
(73) Proprietor: Zhejiang Smart Intelligence Technology Co., Ltd., Ningbo, Zhejiang 315336 (CN)
(72) Inventor: NIU, JiangLong, Hangzhou Bay New District Ningbo, Zhejiang 315336 (CN); JIANG, Jian, Hangzhou Bay New District Ningbo, Zhejiang 315336 (CN); JIANG, ShengXu, Hangzhou Bay New District Ningbo, Zhejiang 315336 (CN)
(74) Representative: Zaboliene, Reda
(86) International application number: PCT/CN2021/090259
(87) International publication number: WO 2022/226780

(56) References cited:
- CN-U- 201 646 055
- CN-U- 206 202 146
- CN-U- 207 579 759
- CN-U- 208 119 058
- CN-U- 209 492 462
- FR-A1- 2 873 068
- JP-A- 2002 036 962
- US-A- 5 158 353

## Description

### CROSS REFERENCE TO RELATED APPLICATION

The present application is the national phase entry of International Patent Application No. PCT/CN2021/090259, filed on April 27, 2021.

### BACKGROUND OF THE APPLICATION

### Field of the Application

The present application relates to the technical field of automotive technology, in particular to a vehicle card box and a vehicle.

### Description of Related Art

Drivers usually carry a lot of cards with them during daily driving, such as highway cards, road pass cards, business cards, and bank cards, etc. With the rapid development of electric vehicles, drivers of electric vehicles also need to carry electric vehicle charging cards. In order to solve the problem of card placement and storage, card storage devices are usually set up. However, the existing card storage devices used in vehicles cannot effectively ensure the stability of the stored cards. During the driving process of the vehicle, the cards are easy to shake or fall out of the card storage device, affecting the driver's driving safety and causing the loss of the card. Currently, most vehicle companies do not design separate card slots, when storing cards, they are mixed with other stuff in the storage box, making it inconvenient to retrieve them; some vehicle models have designed card slots, but they are arranged on the exterior surface, such as on the central control panel of the auxiliary instrument panel, which affects the segmentation and integrity of the design, and especially, when cards are not stored, one or more large gaps are exposed, causing foreign objects easily to fall into the gaps; there are also a few vehicle companies that design pop-up card slots in order to ensure the overall appearance, but it is inevitable to increase the appearance segmentation, and the cost is also relatively high. Obviously, the above technical solutions do not meet the development direction of simple vehicle interior and reducing segmentation.

Based on the shortcomings of the existing technology, there is an urgent need to research a vehicle card box and a vehicle to solve the above problems.

For example, documents of FR2873068A1 and JP2002036962A have disclosed an article storage device with card holder according to the state of the art.

### BRIEF SUMMARY OF THE APPLICATION

In order to solve the above technical problems, the present application provides a vehicle card box according to claim 1 and a vehicle according to claim 14. The present application attaches the card box shell on the storage box side wall to form a receiving cavity therebetween; an elastic member and a card releasing port are provided to allow the card to enter the receiving cavity through the card releasing port, and the elastic member fixes the card in the receiving cavity to avoid shaking or abnormal noise when the vehicle is moving. Further, the card box shell is set inside the storage box, thereby avoiding the vehicle card box from occupying space or affecting the interior appearance of the vehicle.

The present application provides a vehicle card box including a storage box side wall and a card box shell;
wherein after the card box shell is connected to the storage box side wall, a receiving cavity is formed between the card box shell and the storage box side wall, the receiving cavity is configured to receive a card;
an elastic member is provided on the storage box side wall, one end of the elastic member is fixed on the storage box side wall, and the other end of the elastic member is configured to abut against the card, such that the card is fixed in the receiving cavity;
the card box shell is provided with a card releasing port and a notch, the card releasing port and the notch are each communicated with the receiving cavity, the card releasing port and the notch are respectively arranged at both ends of the card box shell, when the card is pushed from the notch, the card is enabled to be pushed out of the receiving cavity from the card releasing port.

Further, one side of the card box shell is opened, and the card box shell includes a first surface, a second surface, and a third surface;
the first surface is arranged opposite to the open side, the second surface and the third surface are arranged opposite to each other, the second surface and the third surface are arranged along the width direction of the card box shell, the second surface and the third surface are each connected to the first surface.

Further, the card releasing port is provided on the second surface, the notch is provided on the first surface and the third surface, and the notch is located at the joint between the first surface and the third surface.

Further, the length direction of the card releasing port is consistent with the width direction of the card box shell, and the length of the card releasing port is greater than the width of the notch.

Further, at least two first limiting ribs are provided on the storage box side wall, the at least two first limiting ribs are distributed along the width direction of the card box shell, and the length direction of the first limiting ribs is consistent with the length direction of the card box shell.

Further, at least two second limiting ribs are provided on the card box shell, the at least two second limiting ribs are distributed along the width direction of the card box shell, and the length direction of the second limiting ribs is consistent with the length direction of the card box shell.

Further, the card box shell is further provided with third limiting ribs, the third limiting ribs are provided on the third surface, and the third limiting ribs are configured to abut against the card.

Further, the open side of the card box shell is provided with clamping parts, the storage box side wall is provided with clamping slots that matches the clamping parts, the card box shell is clamped with the storage box side wall through the clamping parts clamped in the clamping slots.

Further, the number of the clamping parts is consistent with the number of the clamping slots, and the position of the clamping parts corresponds to the position of the clamping slots.

Further, the number of the clamping parts is five, and the clamping parts are spaced from each other at the open side of the card box shell.

Further, the elastic member includes a fixing end and a free end, the fixing end is fixed to the storage box side wall, and the free end is configured to abut against the card such that the card is fixed in the receiving cavity.

Further, the elastic member is an elastic sheet, and the distance from the highest point of the elastic sheet to the inner surface of the card box shell is greater than the thickness of the card.

The present application further provides a vehicle including a storage box and the vehicle card box as described above, wherein the vehicle card box is arranged in the cavity of the storage box.

The embodiments of the present application have the following beneficial effects:

In the present application, the card box shell is attached on the storage box side wall to form a receiving cavity therebetween; an elastic member and a card releasing port are provided to allow the card to enter the receiving cavity through the card releasing port, and the elastic member fixes the card in the receiving cavity to avoid shaking or abnormal noise when the vehicle is moving. Further, the card box shell is arranged inside the storage box, thereby avoiding occupying space or affecting the interior appearance of the vehicle.

### BRIEF DESCRIPTION OF THE DRAWINGS

In order to more clearly illustrate the technical solutions of the present application, the drawings used below for the description of the embodiments or the prior art will be introduced briefly. It is obvious that the accompanying drawings in the following description are only some embodiments of the present application. For those skilled in the art, other drawings can be obtained based on these drawings without creative work.
FIG. 1 is a structural diagram of the vehicle card box in this embodiment;
FIG. 2 is a structural diagram of the vehicle card box after connecting to the storage box in this embodiment;
FIG. 3 is a structural diagram of the card box shell in this embodiment;
FIG. 4 is a structural diagram of the card box shell in this embodiment;
FIG. 5 is a structural diagram of the storage box side wall in this embodiment.

The reference signs in the drawings are as follows:
1-storage box side wall; 2-card box shell; 3-card; 4-storage box; 5-receiving cavity; 11-elastic member; 12-first limiting rib; 13-clamping slot; 21-card releasing port; 22-notch; 23-first surface; 24-second limiting rib; 25-third limiting rib; 26-clamping part; 111-free end.

### DETAILED DESCRIPTION OF THE APPLICATION

The following will provide a clear and complete description of the technical solution in the embodiments of the present application in conjunction with the accompanying drawings. Obviously, the described embodiments are only part of the embodiments of the present application, not all of the embodiments. Based on the embodiments in the present application, all other embodiments obtained by those skilled in the art without creative work shall fall within the scope of protection of the present invention as defined by the appended claims.

It should be noted that the terms "first", "second", etc. in the description and claims of the present application, as well as the accompanying drawings, are used to distinguish similar objects, without necessarily describing a specific order or sequence. It should be understood that the data used in this way can be interchanged in appropriate cases, such that the embodiments of the present application described here can be implemented in sequence other than those illustrated or described here. In addition, the terms "include" and "have", as well as any variations thereof, are intended to cover non-exclusive inclusion. For example, a process, method, system, product, or device that includes a series of steps or units, need not be limited to those clearly listed steps or units, but may also include other steps or units that are not clearly listed or inherent to these processes, methods, products, or devices.

The existing technology has the following shortcomings: card storage devices are set up in the existing technology, but the existing card storage devices used in vehicles cannot effectively ensure the stability of the stored cards. During the driving process of the vehicle, the cards are easy to shake or fall out of the card storage device, affecting the driver's driving safety and causing the loss of the card. Currently, most vehicle companies do not design separate card slots, when storing cards, they are mixed with other stuff in the storage box, making it inconvenient to retrieve them; some vehicle models have designed card slots, but they are arranged on the exterior surface, such as on the central control panel of the auxiliary instrument panel, which affects the segmentation and integrity of the design, and especially, when cards are not stored, one or more large gaps are exposed, causing foreign objects easily to fall into the gaps; there are also a few vehicle companies that design pop-up card slots in order to ensure the overall appearance, but it is inevitable to increase the appearance segmentation, and the cost is also relatively high. Obviously, the above technical solutions do not meet the development direction of simple vehicle interior and reducing segmentation.

In order to address the shortcomings of the existing technology, the present application attaches the card box shell on the storage box side wall to form a receiving cavity therebetween; an elastic member and a card releasing port are provided to allow the card to enter the receiving cavity through the card releasing port, and the elastic member fixes the card in the receiving cavity to avoid shaking or abnormal noise when the vehicle is moving. Further, the card box shell is set inside the storage box, thereby avoiding occupying space or affecting the interior appearance of the vehicle.

### First embodiment

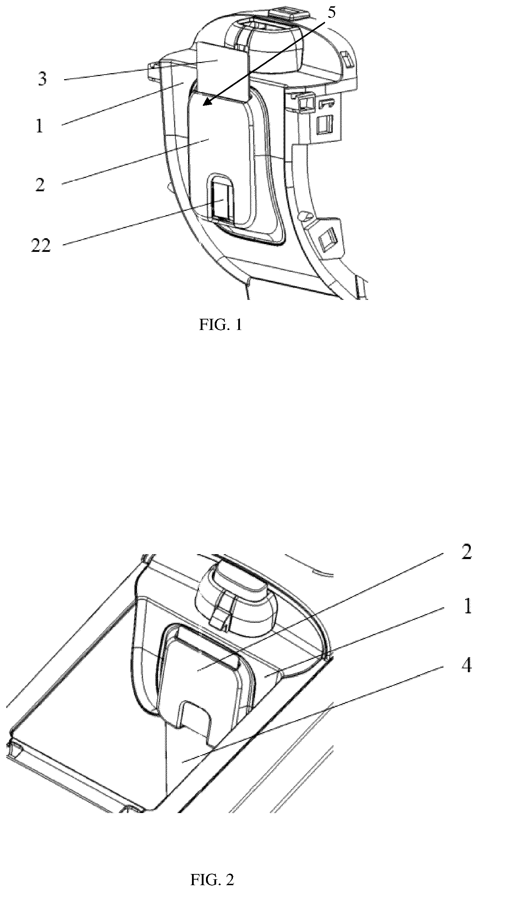

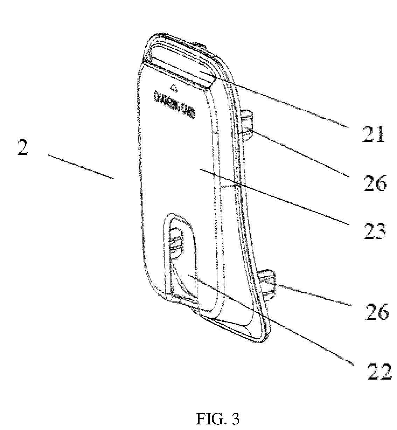

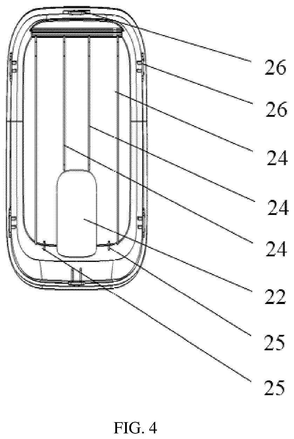

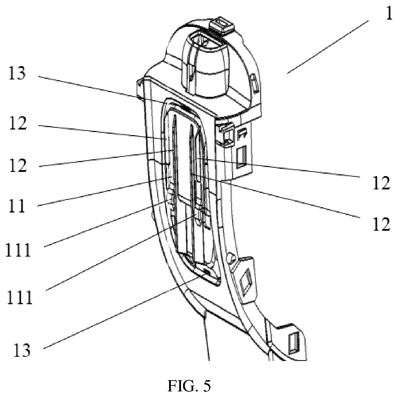

Referring to FIGs. 1 to 5, this embodiment provides a vehicle card box including a storage box side wall 1 and a card box shell 2.

After the card box shell 2 is connected to the storage box side wall 1, a receiving cavity 5 is formed between the card box shell 2 and the storage box side wall 1. A card 3 is placed inside the receiving cavity 5, and the receiving cavity 5 is configured to receive the card 3.

An elastic member 11 is provided on the storage box side wall 1. One end of the elastic member 11 is fixed on the storage box side wall 1, and the other end of the elastic member 11 is configured to abut against the card 3, such that the card 3 is fixed in the receiving cavity 5.

The card box shell 2 is provided with a card releasing port 21 and a notch 22. The card releasing port 21 and the notch 22 are each communicated with the receiving cavity 5. The card releasing port 21 and the notch 22 are respectively arranged at both ends of the card box shell 2. When the card 3 is pushed from the notch 22, the card 3 is enabled to be pushed out of the receiving cavity 5 from the card releasing port 21.

It should be noted that although there is a card storage device in the existing technology, the existing card storage device is arranged on the exterior surface, which affects the appearance; there are also some card storage devices designed as pop-up structures, but the production cost is relatively high. In this embodiment, the card box shell 2 is attached on the storage box side wall 1 to form a receiving cavity 5 therebetween; an elastic member 11 and a card releasing port 21 are provided to allow the card 3 to enter the receiving cavity 5 through the card releasing port 21, and the elastic member 11 fixes the card 3 in the receiving cavity 5 to avoid shaking or abnormal noise when the vehicle is moving. Further, the card box shell 2 is arranged inside the storage box 4, thereby avoiding occupying space or affecting the interior appearance of the vehicle.

It should also be noted that the vehicle card box in this embodiment has an independent structure for storing cards, avoiding the inability to find the required card in a timely manner when the card is stored together with other stuff; and the vehicle card box in this embodiment is provided inside the storage box 4, thereby ensuring that the structure of the vehicle card box does not affect the overall appearance and avoid occupying the internal space of the vehicle.

It should further be noted that the structural size of the vehicle card box is small, and a thickness of 8 mm can be designed as a single-layer card slot, to reduce the layout restrictions of the vehicle card box in this embodiment.

In some possible embodiments, the storage box side wall 1 is provided with a receiving groove. The number of the receiving groove is consistent with the number of the elastic member 11, and the position of the receiving groove corresponds to the position of the free end 111 of the elastic member 11. The receiving groove is configured to provide moving space for the free end 111.

Specifically, when the card 3 is placed into the receiving cavity 5 through the card releasing port 21, the free end 111 retreats toward the receiving groove to vacate space for placing the card 3 and clamping the card 3 tightly inside the receiving cavity 5.

In some possible embodiments, the distance between the highest point of the free end 111 and the surface provided with the second limiting ribs 24 is a first distance, and the thickness of the card 3 is a second distance. The first distance is smaller than the second distance.

In other possible embodiments, the distance between the highest point of the free end 111 and the highest point of the second limiting ribs 24 is a third distance, and the thickness of the card 3 is a second distance. The third distance is smaller than the second distance.

Preferably, one side of the card box shell 2 is opened, and the card box shell 2 includes a first surface 23, a second surface, and a third surface.

The first surface 23 is arranged opposite to the open side. The second surface and the third surface are arranged opposite to each other, and the second surface and the third surface are arranged along the width direction of the card box shell 2. The second surface and the third surface are each connected to the first surface 23.

Preferably, the card releasing port 21 is provided on the second surface. The notch 22 is provided on the first surface 23 and the third surface, and the notch 22 is located at the joint between the first surface 23 and the third surface.

In some possible embodiments, the length direction of the notch 22 is consistent with the length direction of the card box shell 2, and the width direction of the notch 22 is consistent with the width direction of the card box shell 2.

Specifically, the width of the notch 22 is slightly greater than the width of the finger, thus allowing the finger to push the card 3 from the notch 22, causing the card 3 to exit the receiving cavity 5 through the card releasing port 21.

Preferably, the length direction of the card releasing port 21 is consistent with the width direction of the card box shell 2, and the length of the card releasing port 21 is greater than the width of the notch 22.

In some possible embodiments, the width of the card releasing port 21 is greater than the thickness of the card 3, allowing the card 3 to enter the receiving cavity 5 through the card releasing port 21.

In other possible embodiments, according to actual needs, the width of the card releasing port 21 can be set to any value, as long as it is within a reasonable range. For example, the width of the card releasing port 21 is four times the thickness of the card 3, so that the card releasing port 21 can accommodate four cards.

Preferably, at least two first limiting ribs 12 are provided on the storage box side wall 1, the at least two first limiting ribs 12 are distributed along the width direction of the card box shell 2, and the length direction of the first limiting ribs 12 is consistent with the length direction of the card box shell 2.

In some possible embodiments, the number of the first limiting rib 12 is four, and the height of the four first limiting ribs 12 is equal.

Preferably, at least two second limiting ribs 24 are provided on the card box shell 2, the at least two second limiting ribs 24 are distributed along the width direction of the card box shell 2, and the length direction of the second limiting ribs 24 is consistent with the length direction of the card box shell 2.

In some possible embodiments, the number of the second limiting rib 24 is four, and the height of the four second limiting ribs 24 is equal.

In other possible embodiments, the length direction of the first limiting ribs 12 and the length direction of the second limiting ribs 24 can be consistent with the width direction of the card box shell 2, as long as the first limiting ribs 12 and the second limiting ribs 24 are matched so that the first limiting ribs 12 and the second limiting ribs 24 can limit the card 3. It is therefore no limitation here.

Preferably, the card box shell 2 is further provided with third limiting ribs 25, the third limiting ribs 25 are provided on the third surface, and the third limiting ribs 25 are configured to abut against the card 3.

In some possible embodiments, the third limiting ribs 25 are used to restrict the movement of the card 3 towards the third limiting ribs 25, that is, when one end of the card 3 abuts against the third limiting ribs 25, the card 3 cannot move further downwards, and at this moment, the card 3 can only move towards the card releasing port 21 under an external force.

Preferably, the open side of the card box shell 2 is provided with clamping parts 26, and the storage box side wall 1 is provided with clamping slots 13 that matches the clamping parts 26. The card box shell 2 is clamped with the storage box side wall 1 through the clamping parts 26 clamped in the clamping slots 13.

Preferably, the number of the clamping parts 26 is consistent with the number of the clamping slots 13, and the position of the clamping parts 26 corresponds to the position of the clamping slots 13.

Preferably, the number of the clamping parts 26 is five, and the clamping parts 26 are spaced from each other at the open side of the card box shell 2.

In some possible embodiments, the clamping parts 26 are welded to the storage box side wall 1, allowing the card box shell 2 to be fixedly connected to the storage box side wall 1.

Preferably, the elastic member 11 includes a fixing end and a free end 111, the fixing end is fixed to the storage box side wall 1, and the free end 111 is used to abut against the card 3, so that the card 3 is fixed in the receiving cavity 5.

Preferably, the elastic member 11 is an elastic sheet, and the distance from the highest point of the elastic sheet to the inner surface of the card box shell 2 is greater than the thickness of the card 3.

The working principle of the vehicle card box is as follows: when the card 3 needs to be placed into the receiving cavity 5, one end of the card 3 is inserted into the card releasing port 21, and the card 3 is pushed to move towards the third limiting ribs 25. When the card 3 abuts against the third limiting ribs 25, pushing the card 3 is stopped, and at this time, the storage of the card 3 is completed. When the card 3 placed into the receiving cavity 5 needs to be taken out, the driver places the finger in the notch 22 and pushes the card 3 to move towards the card releasing port 21, and when the card 3 protrudes from the card releasing port 21 to be capable of being taken out, the card 3 is then taken out.

Further, the present application provides a vehicle including a storage box 4 and the vehicle card box as described above. The vehicle card box is arranged in the cavity of the storage box 4. In the vehicle with the vehicle card box, the card box shell 2 is attached on the storage box side wall 1 to form a receiving cavity 5 therebetween, and an elastic member 11 and a card releasing port 21 are provided to allow the card 3 to enter the receiving cavity 5 through the card releasing port 21, and the elastic member 11 fixes the card 3 in the receiving cavity 5 to avoid shaking or abnormal noise when the vehicle is moving. Further, the card box shell 2 is arranged inside the storage box 4, thereby avoiding occupying space or affecting the interior appearance of the vehicle.

Although the present application has been described through preferred embodiments, the present application is not limited to the embodiments described herein and further includes various changes and variations made without departing from the scope of the present invention as defined by the appended claims.

In this description, the terms "front", "back", "up", "down", etc. are defined based on the positions of the elements in the drawings and between them, merely for the clarity and convenience of expressing the technical solution. It should be understood that the use of the directional words should not limit the scope of protection of the present application.

In this description, the above embodiments and the features in the embodiments can be combined with each other if no conflict exists.

The above disclosure is only a preferred embodiment of the present application, and of course, it cannot be used to limit the scope of the present application. Therefore, the equivalent changes made according to the claims of the present application still fall within the scope of the present invention as defined by the appended claims.

## Claims

1. A vehicle card box comprising a storage box side wall (1) and a card box shell (2) connected to the storage box side wall (1);
wherein after the card box shell (2) is connected to the storage box side wall (1), a receiving cavity (5) is formed between the card box shell (2) and the storage box side wall (1), the receiving cavity (5) is configured to receive a card (3);
an elastic member (11) is provided on the storage box side wall (1), one end of the elastic member (11) is fixed on the storage box side wall (1), and the other end of the elastic member (11) is configured to abut against the card (3), such that the card (3) is fixed in the receiving cavity (5);
the card box shell (2) is provided with a card releasing port (21) and a notch (22), the card releasing port (21) and the notch (22) are each communicated with the receiving cavity (5), the card releasing port (21) and the notch (22) are respectively arranged at both ends of the card box shell (2), when the card (3) is pushed from the notch (22), the card (3) is enabled to be pushed out of the receiving cavity (5) from the card releasing port (21);
**characterized in that** the storage box side wall (1) is a side wall of a storage box (4), the card box shell (2) is arranged inside the storage box (4), the card releasing port (21) and the notch (22) are located inside the storage box (4);
the storage box (4) has an opening through which articles are placed into or taken out from the storage box (4), the card releasing port (21) and the notch (22) are exposed through the opening, such that the card (3) is accessible to be inserted into or taken out from the receiving cavity (5) via the opening.

2. The vehicle card box as claimed in claim 1, wherein one side of the card box shell (2) is opened, and the card box shell (2) comprises a first surface (23), a second surface, and a third surface;
the first surface (23) is arranged opposite to the open side, the second surface and the third surface are arranged opposite to each other, the second surface and the third surface are arranged along the width direction of the card box shell (2), the second surface and the third surface are each connected to the first surface (23).

3. The vehicle card box as claimed in claim **2,** wherein the card releasing port (21) is provided on the second surface, the notch (22) is provided on the first surface (23) and the third surface, and the notch (22) is located at the joint between the first surface (23) and the third surface.

4. The vehicle card box as claimed in claim **3,** wherein the length direction of the card releasing port (21) is consistent with the width direction of the card box shell (2), and the length of the card releasing port (21) is greater than the width of the notch (22).

5. The vehicle card box as claimed in claim **3,** wherein at least two first limiting ribs (12) are provided on the storage box side wall (1), the at least two first limiting ribs (12) are distributed along the width direction of the card box shell (2), and the length direction of the first limiting ribs (12) is consistent with the length direction of the card box shell (2).

6. The vehicle card box as claimed in claim **5,** wherein at least two second limiting ribs (24) are provided on the card box shell (2), the at least two second limiting ribs (24) are distributed along the width direction of the card box shell (2), and the length direction of the second limiting ribs (24) is consistent with the length direction of the card box shell (2).

7. The vehicle card box as claimed in claim **6,** wherein the card box shell (2) is further provided with third limiting ribs (25), the third limiting ribs (25) are provided on the third surface, and the third limiting ribs (25) are configured to abut against the card (3).

8. The vehicle card box as claimed in claim **2,** wherein the open side of the card box shell (2) is provided with clamping parts (26), the storage box side wall (1) is provided with clamping slots (13) that matches the clamping parts (26), the card box shell (2) is clamped with the storage box side wall (1) through the clamping parts (26) clamped in the clamping slots (13).

9. The vehicle card box as claimed in claim **8,** wherein the number of the clamping parts (26) is consistent with the number of the clamping slots (13), and the position of the clamping parts (26) corresponds to the position of the clamping slots (13).

10. The vehicle card box as claimed in claim **9,** wherein the number of the clamping parts (26) is five, and the clamping parts (26) are spaced from each other at the open side of the card box shell (2).

11. The vehicle card box as claimed in claim **1,** wherein the elastic member (11) comprises a fixing end and a free end (111), the fixing end is fixed to the storage box side wall (1), and the free end (111) is configured to abut against the card (3) such that the card (3) is fixed in the receiving cavity (5).

12. The vehicle card box as claimed in claim **11,** wherein the elastic member (11) is an elastic sheet, and the distance from the highest point of the elastic sheet to the inner surface of the card box shell (2) is greater than the thickness of the card (3).

13. The vehicle card box as claimed in claim **1,** wherein the storage box side wall (1) is provided with a receiving groove, the position of the receiving groove corresponds to the position of the free end (111) of the elastic member (11), the receiving groove is configured to provide moving space for the free end (111); when the card (3) is placed into the receiving cavity (5) through the card releasing port (21), the free end (111) retreats toward the receiving groove.

14. A vehicle comprising a storage box (4) and the vehicle card box as claimed in any one of claims **1** to **13,** wherein the vehicle card box is arranged in the cavity of the storage box (4).

## Patentansprüche

1. Fahrzeugkartenbox, umfassend eine Aufbewahrungsbox-Seitenwand (1) und eine mit der Aufbewahrungsbox-Seitenwand (1) verbundene Kartenbox-Hülle (2),
wobei nach dem Verbinden der Kartenbox-Hülle (2) mit der Aufbewahrungsbox-Seitenwand (1) ein Aufnahmehohlraum (5) zwischen der Kartenbox-Hülle (2) und der Aufbewahrungsbox-Seitenwand (1) gebildet wird, wobei der Aufnahmehohlraum (5) zur Aufnahme einer Karte (3) eingerichtet ist,
wobei ein elastisches Element (11) an der Aufbewahrungsbox-Seitenwand (1) vorgesehen ist, wobei ein Ende des elastischen Elements (11) an der Aufbewahrungsbox-Seitenwand (1) befestigt ist und das andere Ende des elastischen Elements (11) so eingerichtet ist, dass es an der Karte (3) anliegt, sodass die Karte (3) in dem Aufnahmehohlraum (5) befestigt ist,
wobei die Kartenbox-Hülle (2) mit einer Kartenausgabemündung (21) und einer Aussparung (22) versehen ist, wobei die Kartenausgabemündung (21) und die Aussparung (22) jeweils mit dem Aufnahmehohlraum (5) Kommunikation stehen, wobei die Kartenausgabemündung (21) und die Aussparung (22) jeweils an beiden Enden der Kartenbox-Hülle (2) angeordnet sind, wobei wenn die Karte (3) aus der Aussparung (22) geschoben wird, die Karte (3) aus dem Aufnahmehohlraum (5) durch die Kartenausgabemündung (21) herausgeschoben werden kann,
**dadurch gekennzeichnet, dass** die Aufbewahrungsbox-Seitenwand (1) eine Seitenwand einer Aufbewahrungsbox (4) ist, dass die Kartenbox-Hülle (2) innerhalb der Aufbewahrungsbox (4) angeordnet ist, und dass die Kartenausgabemündung (21) sowie die Aussparung (22) sich innerhalb der Aufbewahrungsbox (4) befinden,
wobei die Aufbewahrungsbox (4) eine Öffnung aufweist, durch die Gegenstände in die Aufbewahrungsbox (4) eingelegt oder aus dieser entnommen werden, wobei die Kartenausgabemündung (21) und die Aussparung (22) durch die Öffnung freiliegen, so dass die Karte (3) über die Öffnung zugänglich ist, um in den Aufnahmehohlraum (5) eingelegt oder aus diesem entnommen zu werden.

2. Fahrzeugkartenbox nach Anspruch 1, wobei eine Seite der Kartenbox-Hülle (2) offen ist und die Kartenbox-Hülle (2) eine erste Fläche (23), eine zweite Fläche und eine dritte Fläche umfasst,
wobei die erste Fläche (23) der offenen Seite gegenüberliegend angeordnet ist, wobei die zweite Fläche und die dritte Fläche einander gegenüberliegend angeordnet sind, wobei die zweite Fläche und die dritte Fläche entlang der Breitenrichtung der Kartenbox-Hülle (2) angeordnet sind, wobei die zweite Fläche und die dritte Fläche jeweils mit der ersten Fläche (23) verbunden sind.

3. Fahrzeugkartenbox nach Anspruch **2,** wobei die Kartenausgabemündung (21) an der zweiten Fläche vorgesehen ist, wobei die Aussparung (22) an der ersten Fläche (23) und der dritten Fläche vorgesehen ist und die Aussparung (22) sich an einer Verbindungsstelle zwischen der ersten Fläche (23) und der dritten Fläche befindet.

4. Fahrzeugkartenbox nach Anspruch **3,** wobei die Längenrichtung der Kartenausgabemündung (21) mit der Breitenrichtung der Kartenbox-Hülle (2) übereinstimmt und die Länge der Kartenausgabemündung (21) größer als die Breite der Aussparung (22) ist.

5. Fahrzeugkartenbox nach Anspruch **3,** wobei mindestens zwei erste Begrenzungsrippen (12) an der Aufbewahrungsbox-Seitenwand (1) vorgesehen sind, wobei die mindestens zwei ersten Begrenzungsrippen (12) entlang der Breitenrichtung der Kartenbox-Hülle (2) verteilt sind und die Längenrichtung der ersten Begrenzungsrippen (12) mit der Längenrichtung der Kartenbox-Hülle (2) übereinstimmt.

6. Fahrzeugkartenbox nach Anspruch **5,** wobei mindestens zwei zweite Begrenzungsrippen (24) an der Kartenbox-Hülle (2) vorgesehen sind, wobei die mindestens zwei zweiten Begrenzungsrippen (24) entlang der Breitenrichtung der Kartenbox-Hülle (2) verteilt sind und die Längenrichtung der zweiten Begrenzungsrippen (24) mit der Längenrichtung der Kartenbox-Hülle (2) übereinstimmt.

7. Fahrzeugkartenbox nach Anspruch **6,** wobei die Kartenbox-Hülle (2) ferner mit dritten Begrenzungsrippen (25) versehen ist, wobei die dritten Begrenzungsrippen (25) an der dritten Fläche vorgesehen sind und die dritten Begrenzungsrippen (25) so eingerichtet sind, dass sie an der Karte (3) anliegen.

8. Fahrzeugkartenbox nach Anspruch **2,** wobei die offene Seite der Kartenbox-Hülle (2) mit Klemmteilen (26) versehen ist, wobei die Aufbewahrungsbox-Seitenwand (1) mit Klemmschlitzen (13) versehen ist, die zu den Klemmteilen (26) passen, wobei die Kartenbox-Hülle (2) durch die in die Klemmschlitze (13) eingeklemmten Klemmteile (26) mit der Aufbewahrungsbox-Seitenwand (1) festgeklemmt ist.

9. Fahrzeugkartenbox nach Anspruch **8,** wobei die Anzahl der Klemmteile (26) mit der Anzahl der Klemmschlitze (13) übereinstimmt und die Positionen der Klemmteile (26) den Positionen der Klemmschlitze (13) entsprechen.

10. Fahrzeugkartenbox nach Anspruch **9,** wobei die Anzahl der Klemmteile (26) fünf beträgt und die Klemmteile (26) an der offenen Seite der Kartenbox-Hülle (2) voneinander beabstandet sind.

11. Fahrzeugkartenbox nach Anspruch **1,** wobei das elastische Element (11) ein Befestigungsende und ein freies Ende (111) umfasst, wobei das Befestigungsende an der Aufbewahrungsbox-Seitenwand (1) befestigt ist und das freie Ende (111) so eingerichtet ist, dass es an der Karte (3) anliegt, sodass die Karte (3) in dem Aufnahmehohlraum (5) befestigt ist.

12. Fahrzeugkartenbox nach Anspruch **11,** wobei das elastische Element (11) ein elastisches Blech ist und der Abstand vom höchsten Punkt des elastischen Bleches zur Innenfläche der Kartenbox-Hülle (2) größer als die Dicke der Karte (3) ist.

13. Fahrzeugkartenbox nach Anspruch **1,** wobei die Aufbewahrungsbox-Seitenwand (1) mit einer Aufnahmerille versehen ist, wobei die Position der Aufnahmerille der Position des freien Endes (111) des elastischen Elements (11) entspricht, wobei die Aufnahmerille so eingerichtet ist, dass sie einen Bewegungsraum für das freie Ende (111) bereitstellt, wobei wenn die Karte (3) durch die Kartenausgabemündung (21) in den Aufnahmehohlraum (5) eingelegt wird, sich das freie Ende (111) in Richtung der Aufnahmerille zurückzieht.

14. Fahrzeug, das eine Aufbewahrungsbox (4) und die Fahrzeugkartenbox nach einem der Ansprüche 1 bis 13 umfasst, wobei die Fahrzeugkartenbox im Hohlraum der Aufbewahrungsbox (4) angeordnet ist.

## Revendications

1. Boîte à cartes pour véhicule comprenant une paroi latérale de boîte de rangement (1) et une coque de boîte à cartes (2) reliée à la paroi latérale de boîte de rangement (1) ;
dans laquelle, après la liaison de la coque de boîte à cartes (2) à la paroi latérale de boîte de rangement (1), une cavité de réception (5) est formée entre la coque de boîte à cartes (2) et la paroi latérale de boîte de rangement (1), la cavité de réception (5) étant conçue pour recevoir une carte (3) ;
un élément élastique (11) est prévu sur la paroi latérale de boîte de rangement (1), une extrémité de l'élément élastique (11) est fixée sur la paroi latérale de boîte de rangement (1), et l'autre extrémité de l'élément élastique (11) est conçue pour venir en butée contre la carte (3), de sorte que la carte (3) soit fixée dans la cavité de réception (5) ;
la coque de boîte à cartes (2) est pourvue d'un orifice de libération de carte (21) et d'une encoche (22), l'orifice de libération de carte (21) et l'encoche (22) est chacun en communication avec la cavité de réception (5), l'orifice de libération de carte (21) et l'encoche (22) sont respectivement disposés au niveau de deux extrémités de la coque de boîte à cartes (2), lorsque la carte (3) est poussée hors de l'encoche (22), la carte (3) peut être poussée hors de la cavité de réception (5) par l'orifice de libération de carte (21) ;
**caractérisée en ce que** la paroi latérale de boîte de rangement (1) est une paroi latérale d'une boîte de rangement (4), la coque de boîte à cartes (2) est disposée à l'intérieur de la boîte de rangement (4), l'orifice de libération de carte (21) et l'encoche (22) sont situés à l'intérieur de la boîte de rangement (4) ;
la boîte de rangement (4) a une ouverture par laquelle des articles sont mis dans ou retirés de la boîte de rangement (4), l'orifice de libération de carte (21) et l'encoche (22) sont exposés par l'ouverture, de sorte que la carte (3) soit accessible pour être insérée dans ou retirée de la cavité de réception (5) par l'ouverture.

2. Boîte à cartes pour véhicule selon la revendication **1,** dans laquelle un côté de la coque de boîte à cartes (2) est ouvert, et de la coque de boîte à cartes (2) comprend une première surface (23), une deuxième surface et une troisième surface ;
la première surface (23) est disposée à l'opposé du côté ouvert, la deuxième surface et la troisième surface sont disposées à l'opposé l'une de l'autre, la deuxième surface et la troisième surface sont disposées le long de la direction de la largeur de la coque de boîte à cartes (2), la deuxième surface et la troisième surface sont chacune reliées à la première surface (23).

3. Boîte à cartes pour véhicule selon la revendication **2,** dans laquelle l'orifice de libération de carte (21) est prévu sur la deuxième surface, l'encoche (22) est prévue sur la première surface (23) et la troisième surface, et l'encoche (22) est située au niveau de la jonction entre la première surface (23) et la troisième surface.

4. Boîte à cartes pour véhicule selon la revendication **3,** dans laquelle la direction de la longueur de l'orifice de libération de carte (21) correspond à la direction de la largeur de la coque de boîte à cartes (2), et la longueur de l'orifice de libération de carte (21) est supérieure à la largeur de l'encoche (22).

5. Boîte à cartes pour véhicule selon la revendication **3,** dans laquelle au moins deux premières nervures de limitation (12) sont prévues sur la paroi latérale de boîte de rangement (1), les au moins deux premières nervures de limitation (12) sont réparties le long de la direction de la largeur de la coque de boîte à cartes (2), et la direction de la longueur des premières nervures de limitation (12) correspond à la direction de la longueur de la coque de boîte à cartes (2).

6. Boîte à cartes pour véhicule selon la revendication **5,** dans laquelle au moins deux deuxièmes nervures de limitation (24) sont prévues sur la coque de boîte à cartes (2), les au moins deux deuxièmes nervures de limitation (24) sont réparties le long de la direction de la largeur de la coque de boîte à cartes (2), et la direction de la longueur des deuxièmes nervures de limitation (24) correspond à la direction de la longueur de la coque de boîte à cartes (2).

7. Boîte à cartes pour véhicule selon la revendication **6,** dans laquelle la coque de boîte à cartes (2) est en outre pourvue de troisièmes nervures de limitation (25), les troisièmes nervures de limitation (25) sont prévues sur la troisième surface, et les troisièmes nervures de limitation (25) sont conçues pour venir en butée contre la carte (3).

8. Boîte à cartes pour véhicule selon la revendication **2,** dans laquelle le côté ouvert de la coque de boîte à cartes (2) est pourvu de parties de serrage (26), la paroi latérale de boîte de rangement (1) est pourvue de fentes de serrage (13) qui s'adaptent aux parties de serrage (26), la coque de boîte à cartes (2) est serrée avec la paroi latérale de boîte de rangement (1) par l'intermédiaire des parties de serrage (26) serrées dans les fentes de serrage (13).

9. Boîte à cartes pour véhicule selon la revendication **8,** dans laquelle le nombre des parties de serrage (26) correspond au nombre des fentes de serrage (13), et la position des parties de serrage (26) correspond à la position des fentes de serrage (13).

10. Boîte à cartes pour véhicule selon la revendication **9,** dans laquelle le nombre des parties de serrage (26) est de cinq, et les parties de serrage (26) sont espacés les unes des autres au niveau du côté ouvert de la coque de boîte à cartes (2).

11. Boîte à cartes pour véhicule selon la revendication **1,** dans laquelle l'élément élastique (11) comprend une extrémité de fixation et une extrémité libre (111), l'extrémité de fixation est fixée à la paroi latérale de boîte de rangement (1), et l'extrémité libre (111) est conçue pour venir en butée contre la carte (3) de sorte que la carte (3) soit fixée dans la cavité de réception (5).

12. Boîte à cartes pour véhicule selon la revendication **11,** dans laquelle l'élément élastique (11) est une feuille élastique, et la distance entre le point le plus haut de la feuille élastique et la surface interne de la coque de boîte à cartes (2) est supérieure à l'épaisseur de la carte (3).

13. Boîte à cartes pour véhicule selon la revendication **1,** dans laquelle la paroi latérale de boîte de rangement (1) est pourvue d'une rainure de réception, la position de la rainure de réception correspond à la position de l'extrémité libre (111) de l'élément élastique (11), la rainure de réception est conçue pour fournir un espace de déplacement pour l'extrémité libre (111) ; lorsque la carte (3) est mise dans la cavité de réception (5) par l'orifice de libération de carte (21), l'extrémité libre (111) se rétracte vers la rainure de réception.

14. Véhicule comprenant une boîte de rangement (4) et la boîte à cartes pour véhicule selon l'une quelconque des revendications 1 à 13, dans lequel la boîte à cartes pour véhicule est disposé dans la cavité de la boîte de rangement (4).
